(19) Europäisches Patentamt
European Patent Office
Office européen des brevets

(11) EP 4 794 045 A1

(12) **EUROPEAN PATENT APPLICATION**

(43) Date of publication:
**19.08.2026 Bulletin 2026/34**

(21) Application number: **26157411.5**

(22) Date of filing: **10.02.2026**

(51) International Patent Classification (IPC):
***H01M 10/0525*** *(2010.01)* ***H01M 50/417*** *(2021.01)*
***H01M 50/434*** *(2021.01)* ***H01M 50/443*** *(2021.01)*
***H01M 50/446*** *(2021.01)* ***H01M 50/449*** *(2021.01)*
***H01M 50/46*** *(2021.01)* ***H01M 50/489*** *(2021.01)*

(52) Cooperative Patent Classification (CPC):
**H01M 50/489; H01M 10/0525; H01M 50/409; H01M 50/417; H01M 50/434; H01M 50/443; H01M 50/446; H01M 50/449; H01M 50/451; H01M 50/461; H01M 50/491;** Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.02.2025 CN 202510158168**

(71) Applicant: **AESC Japan Ltd.**
**Yokohama-shi, Kanagawa 220-0012 (JP)**

(72) Inventor: **RAO, Xianmeng**
**Jiangyin City, Wuxi City (CN)**

(74) Representative: **Becker, Eberhard**
**Becker Kurig & Partner**
**Patentanwälte mbB**
**Bavariastraße 7**
**80336 München (DE)**

(54) **SEPARATOR AND ELECTROCHEMICAL DEVICE**

(57) Provided are a separator (100) and an electrochemical device. The separator (100) includes a porous base film (101) and a heat resistant layer (102). The heat resistant layer (102) is disposed on at least one surface of the porous base film (101), and includes inorganic particles and an adhesive agent. A surface static friction coefficient of the heat resistant layer (102) is ≤0.8, and a bulk density A of the heat resistant layer (102) satisfies: A=(0.4 to 0.5)×ρ. A heat resistant layer (102) with dense stacking and flat surface is obtained by controlling the static friction coefficient and bulk density of the heat resistant layer (102), which may increase an effective contact area between the adhesive particles in the heat resistant layer (102) and the electrode sheet, thereby increasing the adhesive force between the separator (100) as a whole and the electrode sheet.

100
103
102
101

FIG. 1

EP 4 794 045 A1

## Description

## BACKGROUND

### Technical Field

The disclosure relates to a field of battery technology, and in particular to a separator and an electrochemical device.

### Related Art

As one of the important components of a battery, a separator serves to isolate a positive electrode and a negative electrode to avoid short circuit in the battery, and a porous structure thereof also provides channels for lithium ion migration and transport. Currently, commercialized separators are mostly polyolefin separators. The materials have relatively low melting points and are prone to significant shrinkage at high temperatures, thereby causing contact between the positive and negative electrodes and rapid accumulation of a large amount of heat, so that there is fire or explosion of the battery due to short circuit, affecting the safety performance of the battery.

Currently, in order to improve the heat resistance and safety of the separator, a heat resistant layer is usually coated on a substrate of the separator. The heat resistant materials in the heat resistant layer are utilized to enhance the heat resistance of the separator. However, such structure of the separator may lead to a problem of detachment between the positive and negative electrodes and the separator due to expansion of electrode sheets after multiple cycles of the battery. Therefore, there is insufficient adhesion between the electrode sheets and the separator as a whole, which subsequently affects the capacity cycle retention rate of the battery.

## SUMMARY

Given the problems existing in the prior art, the disclosure provides a separator and an electrochemical device to improve a problem of insufficient adhesive force between the separator and the electrode sheets.

To achieve the aforementioned objectives and other related objectives, a first aspect of the disclosure provides a separator. The separator includes a porous base film and a heat resistant layer. The heat resistant layer is disposed on at least one surface of the porous base film. The heat resistant layer includes inorganic particles and an adhesive agent. A static friction coefficient of the surface of the heat resistant layer is $\leq 0.8$, and a stacking density A of the heat resistant layer satisfies: $A=(0.4 \text{ to } 0.5)\times\rho$, where $\rho$ indicates a true density of the inorganic particles, in units of $g/cm^3$. By controlling the static friction coefficient and stacking density of the surface of the heat resistant layer, the separator may obtain a heat resistant layer with dense stacking and smooth surface, so that the effective contact area between the adhesive agent in the heat resistant layer and the electrode sheet is increased, thereby increasing the adhesive force between the heat resistant layer and the electrode sheet, obtaining a separator with air permeability in the range of 180 to 203s/100cc, and increasing the capacity retention rate of the battery after 300 cycles at 25°C.

In an embodiment of the disclosure, the separator further includes an adhesive layer. The adhesive layer is disposed on at least another surface of the heat resistant layer opposite to a surface contacting the porous base film. After hot pressing of the battery, adhesive force is exerted between the adhesive layer and the electrode sheet to achieve the shaping effect of the battery. At the same time, the cell wrinkling and deformation caused by expansion of the electrode sheet after cycling may also suppressed, thereby improving the cycle life of the battery. Moreover, the heat resistant layer with dense stacking and smooth surface also increases the effective contact area between the adhesive particles in the adhesive layer and the heat resistant layer, further improving the adhesion between the separator as a whole and the electrode sheet, improving the wrinkling condition of the cell of the battery after hundreds of cycles, so as to increase the capacity retention rate after 300 cycles at 25°C.

In an embodiment of the disclosure, ta difference between a maximum value and a minimum value of an effective adhesion R value on a side of the separator provided with the heat resistant layer is $\leq 20\%$, where the effective adhesion R value indicates a ratio of an effective adhesion area of the separator to a theoretical adhesion area. By controlling the effective adhesion R value difference within 20%, the adhesive force between the separator and the electrode sheet may be uniformly distributed, thereby improving the wrinkling condition of the electrode sheet.

In an embodiment of the disclosure, the effective adhesion R value on the side of the separator provided with the heat resistant layer is 60% to 80%, where the effective adhesion R value indicates the ratio of the effective adhesion area of the separator to the theoretical adhesion area. By controlling the effective adhesion of the separator within 60% to 80%, the adhesion strength of the effective adhesion points between the separator and the electrode sheet is sufficient, increasing the adhesive force between the separator and the electrode sheet.

In an embodiment of the disclosure, a volume ratio of the inorganic particles in the heat resistant layer is 80% to

99%. If the volume ratio of the inorganic particles in the heat resistant layer is lower than 80%, on one hand, the heat resistance capability may be reduced, and on the other hand, an excessively high volume ratio of the adhesive agent may easily cause pore closure of the coating due to adhesive agent swelling during the cell cycling process, thereby affecting the cycling capability of the cell. If the volume ratio of the inorganic particles in the heat resistant layer is higher than 99%, the content of the adhesive agent in the heat resistant layer is too low, which is not conducive to the forming of the heat resistant layer and the shaping effect of the separator as a whole with the electrode sheet.

**In** an embodiment of the disclosure, the inorganic particles are selected from at least one of a combination of oxides, hydroxides and nitrides of silicon, aluminum, zirconium and titanium, and may also be formed by using a composite including at least one of oxides, hydroxides and nitrides of silicon, aluminum, zirconium and titanium. The inorganic particles may be selected from mineral resources such as boehmite, zeolite, apatite, kaolin, mullite, spinel, olivine, and mica, or may be artificially manufactured. In addition, the inorganic particles may be used alone or in combination of two or more. From the perspective of cost, aluminum oxide, hydrated aluminum oxide, aluminum hydroxide, silicon dioxide, titanium dioxide, magnesium hydroxide, and magnesium oxide are preferred. The inorganic particles listed above have good high temperature resistance and have no adverse effect on the battery.

**In** an embodiment of the disclosure, an average particle size of the adhesive agent is smaller than an average particle size of the inorganic particles. The adhesive agent may fill in between the inorganic particles, improving the flatness and adhesion of the heat resistant layer.

**In** an embodiment of the disclosure, a single-side coating amount of the adhesive layer is 0.1 $g/m^2$ to $2g/m^2$.

**In** an embodiment of the disclosure, the adhesive agent is selected from at least one of polyacrylonitrile and a copolymer thereof, polyacrylic acid and a copolymer thereof, polyacrylate and a copolymer thereof, styrene-butadiene copolymer, styrene-acrylate copolymer, and fluorine-based polymer materials.

**In** an embodiment of the disclosure, the porous base film is selected from one or more of polyethylene, polypropylene, non-woven fabric, polyethylene terephthalate, polyimide, and polypropylene-polyethylene-polypropylene composite film.

**In** an embodiment of the disclosure, a single layer thickness of the heat resistant layer is 0.5μm to 5μm, and the thickness of the porous base film is 3μm to 20μm.

**A** second aspect of the disclosure provides an electrochemical device. The electrochemical device includes a positive electrode sheet, a negative electrode sheet, and a separator disposed between the positive electrode sheet and the negative electrode sheet. The separator is the separator in any of the aforementioned embodiments.

## BRIEF DESCRIPTION OF THE DRAWINGS

**In** order to more clearly describe the embodiments of the disclosure or the technical solutions in the prior art, the drawings required for use in the embodiments or prior art are briefly described below. Obviously, the drawings in the following description are only some embodiments of the disclosure. For those of ordinary skill in the art, other embodiments may also be obtained according to the drawings without creative effort.

FIG. 1 is a schematic diagram of a structure of a separator according to an embodiment of the disclosure.
FIG. 2 is a schematic diagram of internal particle arrangement of a separator according to an embodiment of the disclosure.

Descriptions of reference numerals:
100. separator; 101. porous base film; 102. heat-resistant layer; 103. adhesive layer.

## DESCRIPTION OF THE EMBODIMENTS

The embodiments of the disclosure are described below through specific embodiments, and those skilled in the art may easily understand other advantages and effects of the disclosure from the content disclosed in this specification. The disclosure may also be implemented or applied through other different specific embodiments, and various details in this specification may also be modified or changed based on different viewpoints and applications without departing from the spirit of the disclosure. It should be noted that, in the case of no conflict, the following embodiments and features in the embodiments may be combined with each other. It should also be understood that the terms used in the embodiments of the disclosure are for describing specific embodiments, and are not intended to limit the protection scope of the disclosure.

Unless otherwise defined, all technical and scientific terms used herein have the same meaning as commonly understood by those skilled in the technical field of the disclosure. The terms used herein in the specification of the disclosure are only for the purpose of describing specific embodiments, and are not intended to limit the disclosure. The term "and/or" used herein includes any and all combinations of one or more related listed items.

Herein, when a numerical range is involved, unless otherwise specified, the distribution of optional values within

the numerical range is considered to be continuous, and includes the two numerical endpoints (that is, the minimum value and the maximum value) of the numerical range, as well as each value between the two numerical endpoints. When multiple numerical ranges are provided to describe features or characteristics, these numerical ranges may be combined.

Herein, terms such as "multiple", "various", and "several times", unless otherwise specified, refer to a quantity greater than 2 or equal to 2. For example, "one or more" indicates one or greater than or equal to two. Terms such as "further", "furthermore", and "particularly" are used for descriptive purposes to indicate differences in content, but should not be understood as limiting the protection scope of the disclosure.

The definitions of technical terms involved herein are as follows.

Surface static friction coefficient: refers to the physical quantity of frictional resistance between two objects in a stationary state, usually represented by a letter $\mu$. The static friction coefficient determines the minimum external force required to make an object start to slide. If the external force is less than the static friction force, the object may remain stationary.

Bulk density: refers to the mass per unit volume of a material including the material entity, internal pores (open pores and closed pores), and inter-particle voids. The bulk density may be calculated by A=coating surface density/coating thickness.

True density: also known as real density, refers to the mass per unit volume of a material in an absolutely dense state, and refers to the density obtained by dividing the powder mass by the volume (true volume) excluding the voids inside and outside the particles. The calculation formula for true density is $\rho$=m/v, where $\rho$ represents the true density, m represents the mass of the sample, and v represents the volume of the sample.

Effective adhesion R value: refers to the ratio of the effective adhesive area of the separator to the theoretical adhesive area. The theoretical adhesive area refers to an area that may be covered by the adhesive layer of the separator, that is, the surface area of the adhesive layer of the separator. The effective adhesive area indicates the area where the adhesive layer of the separator has a bonding effect, that is, the surface area retained on the adherend after the adhesive layer of the separator is separated from the adherend. The effective adhesion R value difference refers to the difference between the maximum value and the minimum value of R value.

Single-side coating amount: refers to the coating amount of slurry on one surface during the preparation process.

Air permeability of the separator: is a parameter for measuring the air permeability performance of the separator, which indicates the time required for a specific volume of gas to pass through the separator under a certain pressure.

Particle size: refers to the size of particles, usually expressed by diameter. For spherical particles, the particle size is the diameter. For non-spherical particles, the particle size is described by equivalent diameter (such as volume equivalent diameter and area equivalent diameter).

Particle size standard deviation: reflects the dispersion degree of particle size in a particle system. When the standard deviation is large, the particle size distribution becomes uneven. When the standard deviation is small, the particle size distribution becomes concentrated.

The calculation formula for particle size standard deviation $\sigma$ is:

$$\sigma = \sqrt{\frac{1}{N}\sum_{i=1}^{N}(D_i - \bar{D})^2}$$

Where $D_i$ is the particle size of a single particle, $\overline{D}$ is the average particle size, and N is the total number of particles.

**In** the context, parameters such as the surface static friction coefficient of the heat resistant layer, the stacking density of the heat resistant layer, the effective adhesion R value, and the difference between the maximum value and the minimum value of the effective adhesion R value are affected by various stages of the separator production and preparation process, such as material selection, slurry preparation, coating method, selection of production line equipment, and setting of equipment parameters. Those skilled in the art should understand that the adjustment of the separator structure may be achieved through at least the following single or combined control to obtain the corresponding separator. It should be noted that the following description is an example of a manufacturing method for obtaining the corresponding separator, and is not limited to this method.

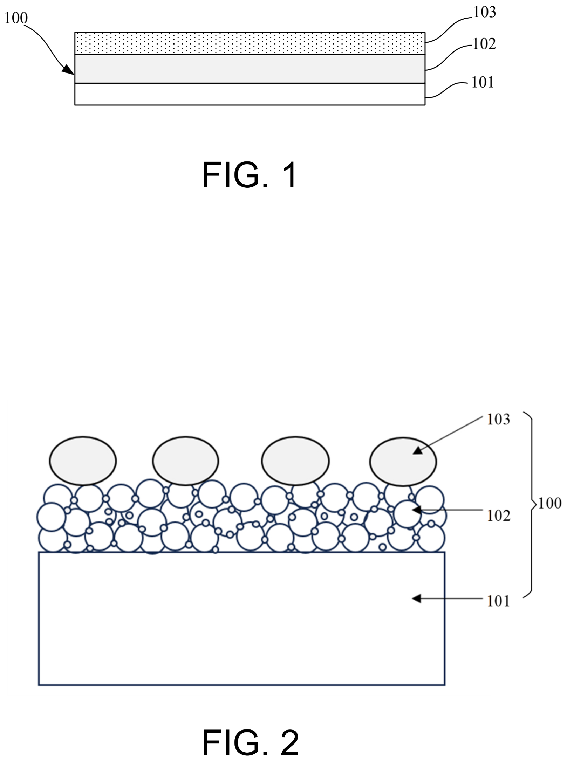

Referring to FIG. 1, a first aspect of the disclosure provides a separator 100. The separator 100 includes a porous base film 101 and a heat resistant layer 102. The porous base film 101 serves as a substrate of the separator 100, and adopts a porous material that is insulating and allows lithium ions to pass through. The heat resistant layer 102 is disposed on at least one surface of the porous base film 101. For example, the porous base film 101 has a first surface and a second surface oppositely disposed along a thickness direction thereof, and the heat resistant layer 102 may be disposed on one of the first surface and the second surface of the porous base film 101, or may be disposed on both the first surface and the

second surface (FIG. 1 only exemplarily shows the case of single-side setting). Those skilled in the art may have selection according to actual production needs. Disposing the heat resistant layer 102 may effectively improve the heat resistance performance of the separator 100.

**In** some embodiments, the porous base film 101 may be selected from any porous material that may be used in separators in the art. As an example, the porous base film 101 is selected from one or more of polyethylene, polypropylene, non-woven fabric, polyethylene terephthalate, polyimide, and polypropylene-polyethylene-polypropylene composite film. That is, the porous base film 101 may be selected from any one of the aforementioned materials such as polyethylene, non-woven fabric, polypropylene, or polyimide, or a mixture of the same material with different weight average molecular weight, viscosity average molecular weight, or number average molecular weight. The porous base film 101 may also be selected from a combination of any two or more of the aforementioned materials. For example, the porous base film 101 is selected from a combination of polyethylene and polypropylene or a combination of non-woven fabric, polyethylene terephthalate, and polyimide. For a manufacturing method of the porous base film 101, there is no particular limitation as long as the porous base film 101 having the aforementioned characteristics may be obtained. Hereinafter, the manufacturing method of the porous base film 101 is described by embodiments: forming a porous film by melting and extruding polymer resin; or forming a non-woven fabric by aggregating filaments obtained by melting/spinning polymer resin; or adopting a composite film of two or more layers of substrates prepared by the aforementioned two methods, etc.

**A** thickness and porosity of the porous base film 101 may be set according to actual production needs, and are not limited herein. As an example, the thickness of the porous base film 101 is 3μm to 20μm. For example, the thickness of the porous base film 101 may be 3μm, 5μm, 10μm, 15μm, or 20μm. The porosity of the porous base film 101 is 20% to 70%. For example, the porosity of the porous base film 101 may be 20%, 40%, 60%, or 70%.

The porous base film 101 mentioned above has a relatively low melting point and is prone to significant shrinkage at high temperatures, thereby affecting the safety performance of the battery. Therefore, the separator 100 of the disclosure has a heat resistant layer 102 disposed on at least one side of the porous base film 101 to improve the heat resistance performance of the separator 100.

**The** heat resistant layer 102 includes inorganic particles and an adhesive agent. The inorganic particles are selected from high-temperature resistant ceramic materials and have no adverse effect on the battery. In some embodiments, the inorganic particles include but are not limited to at least one of aluminum oxide, hydrated aluminum oxide (boehmite), aluminum hydroxide, silicon dioxide, titanium dioxide, barium sulfate, barium titanate, magnesium hydroxide, and magnesium oxide. That is, the inorganic particles may be selected from any one of the aforementioned materials such as aluminum oxide, or titanium dioxide, or magnesium oxide, and may also be selected from a combination of any two or more of the aforementioned materials such as a combination of barium sulfate and barium titanate, or a combination of aluminum oxide, hydrated aluminum oxide, and aluminum hydroxide. It should be noted that when the inorganic particles are a combination of two or more, there is no limitation of the ratio between the components in the combination, and the components may be mixed in any ratio. The adhesive agent is configured to adhere the inorganic particles and provide adhesive force between the heat resistant layer 102 and the porous base film 101. In some embodiments, the adhesive agent includes at least one of polyacrylonitrile and a copolymer thereof, polyacrylic acid and a copolymer thereof, polyacrylate and a copolymer thereof, acrylates, styrene-butadiene copolymer, styrene-acrylate copolymer, and fluorine-based polymer materials. That is, the types of adhesive agents listed above may be used alone or in combination. For example, the adhesive agent is polyacrylonitrile, or polyacrylic acid, or polyacrylate, or acrylates, or styrene-butadiene copolymer, or a combination of styrene-acrylate copolymer and fluorine-based polymer materials. Further, an adhesive agent of the heat resistant layer 102 is an emulsion-type adhesive agent, and the average particle size of the emulsion-type adhesive agent is smaller than the average particle size of the inorganic particles. Such adhesive agent may fill in between the inorganic particles to improve the flatness and adhesiveness of the heat resistant layer 102.

**In** an embodiment, the heat resistant layer 102 may be prepared by the following method. First, the inorganic particles, the adhesive agent, and a solvent are mixed and stirred uniformly based on a ratio to prepare a heat resistant layer slurry. The heat resistant layer slurry is coated on a surface of the porous base film 101, solidified and dried to obtain the heat resistant layer 102. Since the solvent is mainly configured to disperse the inorganic particles and the adhesive agent, and the inorganic heat resistant layer 102 needs to be dried, an amount of solvent does not need to be particularly limited and may be selected on a basis to uniformly disperse the inorganic particles and the adhesive agent according to actual production needs. As an example, the amount of solvent satisfies that a solid content of the heat resistant layer slurry is 32wt% to 45wt%, for example, 32wt%, 35wt%, 38wt% or 45wt%. The solvent is, for example, deionized water. A thickness of the heat resistant layer 102 may be set according to actual needs. As an example, the single-side thickness of the heat resistant layer 102 is 0.5 to 5μm. For example, the single-side thickness of the heat resistant layer 102 may be 0.5μm, 2μm, 3μm, or 5μm.

For a coating method of the heat resistant layer 102, there is no particular limitation as long as the method may achieve the layer thickness and coating area in the need. Embodiments may include a gravure coating method, a small-diameter gravure coating method, a reverse roll coating method, a transfer roll coating method, a matched roll coating method, a dip coating method, a blade coating method, an air knife coating method, a knife coating method, a bar coating

method, a squeeze coating method, a cast coating method, a die coating method, a screen printing method, and a spray coating method.

During a battery cycle process, if the adhesive force between the positive and negative electrode sheets and the separator is insufficient, as the electrode sheet expands, detachment or misalignment points may occur between the positive and negative electrode sheets and the separator, which results in overall wrinkling and deformation of the cell, and reduces the cycle life of the battery. The inventors of the present application found in research that: by controlling the surface static friction coefficient $\mu$ of the heat resistant layer to $\leq 0.8$ and controlling the bulk density of the heat resistant layer to $(0.4 \text{ to } 0.5) \times \rho$, where $\rho$ indicates the true density of the inorganic particles, in units of $g/cm^3$, the adhesive force between the separator as a whole and the electrode sheet may be increased. Therefore, a problem of insufficient adhesive force between the electrode sheet and the separator and a problem of poor air permeability may be improved, thereby increasing a capacity retention rate after 300 cycles at 25°C.

**In** the disclosure, a surface static friction coefficient $\mu$ of the heat resistant layer 102 is $\leq 0.8$. In some embodiments, the surface static friction coefficient $\mu$ of the heat resistant layer 102 may be 0.8, 0.5, 0.3, or 0.1. When the static friction coefficient $\mu$ is smaller, a surface flatness of the heat resistant layer 102 becomes higher. When an effective contact area between the heat resistant layer 102 and the porous base film 101 is larger, the adhesive force between the separator as a whole and the electrode sheet becomes stronger. At the same time, the bulk density A of the heat resistant layer 102 satisfies: $A=(0.4 \text{ to } 0.5) \times \rho$, where $\rho$ indicates the true density of the inorganic particles, in units of $g/cm^3$. That is, the bulk density of the heat resistant layer 102 is related to the type of inorganic particles. For example, if the inorganic particles are boehmite, and the true density of boehmite is $3.07 g/cm^3$, then a range of bulk density should be limited between 1.228 to 1.535 $g/cm^3$. The bulk density A of the heat resistant layer 102 may be specifically listed as $0.4\rho$, $0.45\rho$, or $0.5\rho$, etc. When the surface static friction coefficient of the heat resistant layer 102 and the bulk density of the heat resistant layer 102 are within the aforementioned specific ranges, a heat resistant layer 102 with dense stacking and a relatively flat surface may be obtained. In this way, the effective adhesive area between the adhesive particles in the heat resistant layer 102 and the porous base film 101 increases, thereby increasing the adhesive force between the heat resistant layer 102 and the porous base film 101, and increasing the adhesive force between the separator 100 as a whole and the electrode sheet. If the aforementioned specific range is satisfied by the static friction coefficient $\mu$ but not the bulk density A, the obtained heat resistant layer 102 is not dense enough. If the aforementioned specific range is satisfied by the bulk density A but not the static friction coefficient $\mu$, the surface of the obtained heat resistant layer 102 is not flat enough. The aforementioned two cases may cause insufficient adhesive force between the heat resistant layer 102 and the porous base film 101, thereby affecting the adhesive force between the separator 100 and the electrode sheet. Here, stacking, leveling, and shaping effects during the process of coating the heat resistant layer may be adjusted by at least adjusting the particle size of the inorganic particles in the heat resistant layer, the solid content of the heat resistant layer slurry, the viscosity of the heat resistant layer slurry, and the transfer rate when the heat resistant layer 102 slurry is transferred to the porous base film 101 to achieve coating, so as to adjust the surface static friction coefficient $\mu$ of the heat resistant layer and the bulk density of the heat resistant layer.

**To** ensure that the heat resistance performance of the separator 100 satisfies the heat resistance requirements, the volume ratio of the inorganic particles in the heat resistant layer 102 is optimally maintained at 80% and above to 99% and below. If the volume ratio of the inorganic particles in the heat resistant layer 102 is lower than 80%, the heat resistance capability of the heat resistant layer 102 may decrease, and the volume ratio of the adhesive agent in the heat resistant layer 102 may also increase, which may easily cause pore closure of the coating due to adhesive agent swelling problems during the cell cycle process, thereby affecting the cycle capability of the cell. Further, the volume ratio of the inorganic particles in the heat resistant layer 102 is 90% and above. Furthermore, the volume ratio of the inorganic particles in the heat resistant layer 102 is 90% to 99%, which may be specifically listed as 93%, 95%, 97%, etc.

**In** an embodiment, the separator further includes an adhesive layer 103. The adhesive layer 103 is disposed on at least another surface of the contact surface between the heat resistant layer 102 and the porous base film 101. After hot pressing of the battery, an adhesive force is exerted between the adhesive layer 103 and the electrode sheet, achieving the shaping effect of the battery. At the same time, the cell wrinkling deformation caused by expansion of the electrode sheet after cycling may also suppressed, thereby improving the cycle life of the battery. The adhesive layer 103 is disposed on at least another surface of the contact surface between the heat resistant layer 102 and the porous base film 101, including the following cases. If the heat resistant layer 102 is disposed on a surface of the porous base film 110, the adhesive layer 103 may be disposed only on the surface of the heat resistant layer 102 facing away from the porous base film 101, or may be disposed on both the surface of the heat resistant layer 102 facing away from the porous base film 101 and a surface of the porous base film 110 where the heat resistant layer 102 is not disposed. If the heat resistant layer 102 is disposed on both surfaces of the porous base film 110, the adhesive layer 103 is disposed on both surfaces of the heat resistant layer 102, and located on the surface of the heat resistant layer 102 facing away from the porous base film 101. The specific setting of the adhesive layer 103 may be selected according to actual conditions. Preferably, the heat resistant layer 102 is disposed on both surfaces of the porous base film 101, and the adhesive layer 103 is disposed on both surfaces of the heat resistant layers 102 facing away from the porous base film.

**The** adhesive layer 103 may be disposed according to conventional components in the art. As an example, the adhesive layer 103 includes at least one of polyacrylonitrile and a copolymer thereof, polyacrylic acid and a copolymer thereof, polyacrylate and a copolymer thereof, styrene-butadiene copolymer, styrene-acrylate copolymer, and fluorine-based polymer materials. That is, the adhesive layer 103 may be selected from any one of the aforementioned materials, for example, polyacrylonitrile, or polyacrylic acid, or polyacrylate, or styrene-acrylate copolymer. The adhesive agent may also be selected from a combination of any two or more of the aforementioned materials, for example, a combination of styrene-acrylate copolymer and fluorine-based polymer materials.

The adhesive layer 103 may be prepared by the following method. The adhesive agent, solvent, or other additives are mixed in ratio and stirring uniformly to obtain the adhesive layer slurry. The adhesive layer slurry is coated on the porous base film 101 or the heat resistant layer 102, dried and volatilized to remove the solvent to obtain the adhesive layer 103.

For the coating method of the adhesive layer 103, there is no particular limitation as long as the method may achieve the layer thickness and coating area in the need. Embodiments include a gravure coating method, a small-diameter gravure coating method, a reverse roll coating method, a transfer roll coating method, a matched roll coating method, a dip coating method, a blade coating method, an air knife coating method, a knife coating method, bar coating method, a squeeze coating method, a cast coating method, a die coating method, a screen printing method, and a spray coating method.

**In** an embodiment, the single-side coating amount of the adhesive layer 103 is 0.1 g/$m^2$ to 2g/$m^2$. That is, during the process of preparing the separator, when preparing the adhesive layer 103, the preparation is carried out by coating 0.1 g/$m^2$ to 2g of the adhesive layer slurry per square meter of coating surface. Further, the single-side coating amount of the adhesive layer 103 is 0.5 g/$m^2$ to 1.5g/$m^2$. Furthermore, the single-side coating amount of the adhesive layer 103 may be 0.8g/$m^2$, 1.0g/$m^2$, or 1.5g/$m^2$, etc.

**In** an embodiment, the difference between the maximum value and the minimum value of the effective adhesion R value (R value difference) on a side of the separator 100 where the heat resistant layer 102 is disposed is less than or equal to 20%. Exemplarily, the R value difference may be 20%, 15%, 10%, 5%, or 3%. When the R value difference is smaller, the distribution of the adhesion force between the separator 100 and the electrode sheet becomes uniform, which may effectively improve the cell wrinkling deformation caused by expansion of the electrode sheet after cycling and improve the flatness. Here, at least the weight ratio of the adhesive agent in the adhesive layer 103, the coverage rate of the adhesive layer 103 on the heat resistant layer 102, the surface density of the adhesive layer 103, and the coating equipment parameters of the adhesive layer 103 may be adjusted to regulate the structural morphology and distribution of the adhesive layer 103 on the side of the heat resistant layer 102, so as to adjust the effective adhesion R value difference on the side of the separator 100 where the heat resistant layer 102 is disposed.

Further, the effective adhesion R value on the side of the separator 100 where the heat resistant layer 102 is disposed is 60% to 80%, which may be specifically listed as 60%, 70%, or 80%. When the effective adhesion R value is within the aforementioned range, the adhesion strength of the effective adhesion points between the separator 100 and the electrode sheet is sufficient, which increases the adhesive force between the separator 100 and the electrode sheet. If the R value is lower than 60%, there is a certain adhesive force between the separator and the electrode sheet. The shaping effect of the bare cell is relatively poor, and cell deformation and expansion may easily occur. The relatively uneven resistance at the interface may lead to increased polarization, increased capacity loss during cycling, and narrowing of the lithium plating window of the cell. If the R value is too high, the remaining space between the separator and the electrode sheet is relatively too small. The retention amount of electrolyte may be relatively reduced, the electrolyte is relatively insufficient at the later stage of cycling, and purple spot problems are prone to occur. Here, at least the weight ratio of the adhesive agent in the adhesive layer 103, the coverage rate of the adhesive layer 103 on the heat resistant layer 102, the surface density of the adhesive layer 103, and the coating equipment parameters of the adhesive layer 103 may be adjusted to regulate the structural morphology and distribution of the adhesive layer 103 on the side of the heat resistant layer 102, so as to adjust the effective adhesion R value on the side of the separator 100 where the heat resistant layer 102 is disposed.

A second aspect of the disclosure provides an electrochemical device. The electrochemical device includes the separator 100 described above in the disclosure.

The electrochemical device of the disclosure may be any energy storage device known in the art, such as a supercapacitor, a lithium ion secondary battery, and a sodium ion secondary battery. A structure of the electrochemical device is described below by taking a lithium ion secondary battery as an example.

The lithium ion battery includes a positive electrode sheet, a negative electrode sheet, and a separator. The separator is disposed between the positive electrode sheet and the negative electrode sheet, and forms a bare cell with the positive electrode sheet and the negative electrode sheet through stacking or winding.

Specifically, the positive electrode sheet includes a positive electrode current collector and a positive electrode active material layer disposed on at least one side surface of the positive electrode current collector. The positive electrode current collector is, for example, a foil formed by surface treatment of nickel, titanium, aluminum, silver, stainless steel, or carbon. In addition to foil, the positive electrode current collector may also adopt any one or a combination of various forms

such as film, mesh, porous, foam, or non-woven fabric. A thickness of the positive electrode current collector is, for example, 8μm to 15μm. In this embodiment, the positive electrode current collector is, for example, aluminum foil. A thickness of the aluminum foil is, for example, 13μm. The positive electrode active material layer includes a positive electrode active material, a positive electrode conductive agent, and a positive electrode adhesive agent. The positive electrode active material, the positive electrode conductive agent, and the positive electrode adhesive agent are not specifically limited here, and those skilled in the art may select according to actual needs.

The positive electrode active material may be selected from any material used in lithium ion batteries, that is, compounds that may reversibly intercalate and deintercalate lithium ions may be used. In the disclosure, the positive electrode active material is selected from one or a combination of lithium cobalt oxide, lithium manganese oxide, lithium iron phosphate, and nickel cobalt manganese metal oxide (NCM), but is not limited thereto. The positive electrode adhesive agent is, for example, selected from any one or more of polyvinylidene fluoride (PVDF), poly(ethylene oxide) (PEO), polyamide (PA), polyacrylonitrile (PAN), polyacrylate, polyvinylether, polymethyl methacrylate (PMMA), ethylene-propylene-diene terpolymer (EPDM), polyhexafluoropropylene, or polymerized styrene butadiene rubber (SBR). The positive electrode conductive agent is, for example, selected from one or at least two of conductive carbon black (Super P, Super S, and 350G), acetylene black, graphene, carbon nanotubes, carbon fiber (VGCF), and Ketjen black.

The negative electrode sheet includes a negative electrode current collector and a negative electrode active material layer disposed on at least one side surface of the negative electrode current collector. The negative electrode current collector is, for example, selected from one of copper foil current collector, composite copper foil current collector, carbon current collector, foam copper current collector, or stainless steel current collector. A thickness of the negative electrode current collector is, for example, 8μm to 15μm. In this embodiment, the negative electrode sheet current collector is copper foil. A thickness of the copper foil is, for example, 13μm. The negative electrode current collector has two opposite surfaces in a thickness direction. The negative electrode active material layer is disposed on either one or both of the two opposite surfaces of the negative electrode current collector. The negative electrode active material layer includes a negative electrode active material, a negative electrode conductive agent, a negative electrode adhesive agent, and a thickener. The specific types of the negative electrode active material, the negative electrode conductive agent, and the negative electrode adhesive agent are not specifically limited here. Materials known in the art that may be used in lithium ion batteries may be adopted, and those skilled in the art may select according to actual needs.

The negative electrode active material is selected from compounds that may intercalate-deintercalate lithium ions. In this embodiment, the negative electrode active material includes but is not limited to artificial graphite and natural graphite. The negative electrode conductive agent is selected from one or more of acetylene black, conductive carbon black (Super P, Super S, and 350G), carbon fiber (VGCF), carbon nanotubes (CNT), and Ketjen black. The negative electrode adhesive agent is selected from any one of polyacrylic acid (PAA), sodium polyacrylate (PAAS), polyacrylamide (PAM), polyvinyl alcohol (PVA), styrene butadiene rubber (SBR), or a combination of several mixed in any ratio. The thickener is selected from sodium carboxymethyl cellulose (CMC-Na) or lithium carboxymethyl cellulose (CMC-Li).

The lithium ion battery also includes an electrolyte, which may be a solid electrolyte or a liquid electrolyte. In this embodiment, the electrolyte is a liquid electrolyte (that is, electrolyte solution). The liquid electrolyte includes a lithium salt and an organic solvent. The disclosure does not limit the specific types of the lithium salt and the organic solvent, and lithium salts and organic solvents well known in the art may be selected. As an example, the lithium salt is selected from one or more of $LiPF_6$, $LiBF_4$, $LiN(SO_2F)_2$ (abbreviated as LiFSI), $LiN(CF_3SO_2)_2$ (abbreviated as LiTFSI), $LiClO_4$, $LiAsF_6$, $LiB(C_2O_4)_2$ (abbreviated as LiBOB), and $LiBF_2C_2O_4$ (abbreviated as LiDFOB). Further, the organic solvent is a non-aqueous organic solvent. The non-aqueous organic solvent may include any type of carbonate and/or carboxylate. The carbonate may include cyclic carbonate or chain carbonate. The non-aqueous organic solvent may also include halogenated compounds of carbonate. Specifically, the organic solvent is selected from one or more of ethylene carbonate (EC), propylene carbonate (PC), butylene carbonate, pentylene carbonate, fluoroethylene carbonate, dimethyl carbonate, diethyl carbonate (DEC), dipropyl carbonate, ethyl methyl carbonate, γ-butyrolactone, methyl formate, ethyl formate, ethyl propionate, propyl propionate, and tetrahydrofuran.

Furthermore, some additives may also be added to the electrolyte solution according to actual needs, such as ethylene sulfate (DTD), 1,3-propanesultone (PS), vinylene carbonate (VC), or vinyl ethylene carbonate (VEC).

The lithium ion secondary battery further includes a housing. The shape and material of the housing are related to the type of the lithium ion battery. For example, when the lithium ion battery is a pouch battery, the housing may be packaged with an aluminum-plastic film; when the lithium ion battery is a prismatic battery or a cylindrical battery, the housing may adopt a prismatic housing or a cylindrical housing matching the shape of the bare cell. A material may be selected from stainless steel and other materials.

The lithium ion secondary battery may be prepared according to methods well known in the art, which is not repeated herein.

The technical solutions of the disclosure are described in detail below through several specific embodiments and comparative examples. Unless otherwise specified, the raw materials and reagents used in the following examples are all commercially available products, or may be prepared by conventional methods in the art, and the instruments used in the

embodiments are all commercially available.

[Embodiment 1]

In this embodiment, a separator is provided. The separator includes a porous base film and a heat resistant layer. The porous base film is a 7μm porous polyethylene film. The heat resistant layer includes inorganic particles (boehmite) and an adhesive agent (polyacrylonitrile type). In this embodiment, the heat resistant layer is disposed on both surfaces of the porous base film. The types and amounts of substances in the heat resistant layer are shown in the preparation method and Table 1.

The preparation process of the separator is as follows.

First, deionized water and boehmite (particle size standard deviation $\sigma$=1.06μm) are added into a dual planetary mixer, and dispersed at high speed at 40°C for 1 hour. Next, the adhesive agent (polyacrylonitrile type) is added, and stirred at low speed at room temperature for 1 hour to obtain a heat resistant layer slurry. The solid content of the heat resistant layer slurry is 42%, where a dry matter ratio of boehmite to adhesive agent is 93:6. Next, the heat resistant layer slurry is coated on both surfaces of a porous polyethylene film with a thickness of 7μm by a micro-gravure roller coating method, and then dried at 45°C to obtain a separator with a heat resistant layer. The micro-gravure surface cells are designed with wide openings and shallow depths, where the cell size is a mesh pitch of 145μm, a cell depth of 39μm, and the single-side thickness of the heat resistant layer is 2μm.

[Embodiment 2]

During the process of preparing the separator, compared with Embodiment 1, a solid content of the heat resistant layer slurry is adjusted to 38%, and other processes and parameters remain consistent with Embodiment 1.

[Embodiments 3 to 4]

During the process of preparing the separator, compared with Embodiment 2, micro-gravure rollers with different cell size designs are adopted for heat resistant layer coating. The cell size of Embodiment 3 is a mesh pitch of 120μm and a cell depth of 47μm. The micro-gravure surface cells adopted in Embodiment 4 are designed with narrow openings and large depths, where the cell size is a mesh pitch of 106μm and a cell depth of 53μm. The cell design in Embodiment 3 is between Embodiment 4 and Embodiment 1. The unit cell volume is consistent among the three designs. Other processes and parameters remain consistent with Embodiment 2.

[Embodiment 5]

During the process of preparing the separator, compared with Embodiment 1, the solid content of the heat resistant layer slurry is adjusted to 32%, and other processes and parameters remain consistent with Embodiment 4.

[Embodiment 6]

During the process of preparing the separator, compared with Embodiment 4, the solid content of the heat resistant layer slurry is adjusted to 35%, and other processes and parameters remain consistent with Embodiment 4.

[Embodiments 7 to 9]

During the process of preparing the separator, compared with Embodiment 5, the inorganic particles are respectively replaced with alumina, titanium dioxide, and barium titanate, and other processes and parameters remain consistent with Embodiment 5.

[Embodiment 10]

Based on the separator of Embodiment 5, adhesive layer coating is performed. The adhesive layer coating process is as follows. First, deionized water and a polyacrylonitrile-based auxiliary adhesive agent are added to a double planetary mixer, and stirred at low speed for 1 hour at room temperature. Next, PVDF powder is added, and dispersed at high speed for 3 hours at 40°C to obtain adhesive layer slurry. The solid content of the adhesive layer slurry is 12%, where a dry matter ratio of PVDF to auxiliary adhesive agent is 9:1. Next, the adhesive layer slurry is coated on both surfaces of the separator with heat resistant layer by spray coating. The spray rotation speed is set to 5000rpm. The spray rotor spacing increases from left to right. In Embodiment 10, the rotor spacing increases from left to right in increments of 24mm, the initial

spacing is 150mm, and then drying at 45°C, a separator with both heat resistant layer and adhesive layer on both sides are obtained. The coating amount of each adhesive layer is 0.5g/m$^2$, and the adhesive layer is coated on the surface of the heat resistant layer. Other processes and parameters remain consistent with Embodiment 5.

[Embodiments 11 to 13]

During the process of preparing the separator, compared with Embodiment 10, the spacing between the rotors of the rotary spray coating head needs to be adjusted to prepare separators with different adhesive layer coating uniformity. The rotor spacing increases from left to right. In Embodiment 12, the rotors are equally spaced. The rotor spacing in Embodiment 11 and 13 is at a level between the two, and the rotor spacing in Embodiment 11 is greater than that in Embodiment 13. The rotor spacing parameters of each embodiment are as follows. In Embodiment 12, the rotors are equally spaced at 150mm. In Embodiment 11, the rotor spacing increases from left to right in increments of 16mm, and the initial spacing is 150mm. In Embodiment 13, the rotor spacing increases from left to right in increments of 8mm. Other processes and parameters remain consistent with Embodiment 10.

[Embodiment 14]

During the process of preparing the separator, compared with Embodiment 13, the rotation speed of the rotor during rotary spray coating is increased, and the standard deviation of the single spray point area is reduced, so that the number of effective bonding points is increased, and the spray rotation speed is 8000rpm. Other processes and parameters remain consistent with Embodiment 13.

[Embodiment 15-16]

During the process of preparing the separator, compared with Embodiment 14, the spacing between the rotors of the rotary spray coating head is adjusted. The rotor spacing in Embodiment 16 is the same as that in Embodiment 12. In Embodiment 15, the rotor spacing increases from left to right in increments of 4mm, and the initial spacing is 150mm. Other processes and parameters remain consistent with Embodiment 14.

[Comparative Example 1]

During the process of preparing the separator, compared with Embodiment 3, the solid content of the heat resistant layer slurry is adjusted to 45%, and other processes and parameters remain consistent with Embodiment 3.

[Comparative Example 2]

During the process of preparing the separator, compared with Embodiment 2, the mesh hole size is selected as mesh pitch of 190μm and mesh hole depth of 32μm, and other processes and parameters remain consistent with Embodiment 2.

[Comparative Example 3]

During the process of preparing the separator, the gravure roller mesh hole design adopted is further narrowed and deepened based on Embodiment 4, where the mesh hole size is mesh pitch of 92μm and mesh hole depth of 61 μm, while the mesh hole volume remains unchanged, and other processes and parameters remain consistent with Embodiment 4.

To verify the effects of the separators in each example, the disclosure assembles the separators of Embodiments 1-16 and Comparative Examples 1-3 in lithium ion secondary batteries respectively, and the preparation process of the lithium ion secondary battery is as follows.

(1) Positive electrode preparation

The positive electrode active material such as NCM523 (molar ratio of nickel cobalt manganese is 5:2:3; single crystal material), positive electrode conductive agent such as acetylene black and the positive electrode adhesive agent such as PVDF are fully stirred in NMP based on the weight ratio of 96:2:2 to form a uniform positive electrode slurry. The positive electrode slurry is coated on aluminum foil of the positive electrode current collector, dried and cold pressed to obtain the positive electrode sheet. The compaction density of the positive electrode sheet is controlled at 2.58g/cm$^3$.

(2) Negative electrode preparation

The negative electrode active material such as artificial graphite, the negative electrode conductive agent such as acetylene black, adhesive agent SBR, and the negative electrode adhesive agent such as sodium carboxymethyl cellulose (CMC) are fully stirred and mixed in deionized water based on the weight ratio of 97:1:1:1 to form a uniform negative electrode slurry. The negative electrode slurry is coated on copper foil of the negative electrode sheet current collector, dried and cold pressed to obtain the negative electrode sheet. The compaction density of the negative electrode sheet is controlled at 1.65g/cm$^3$.

(3) Electrolyte preparation

In an argon atmosphere glove box with water content <10ppm, EC, PC, and DEC are mixed based on the volume ratio of EC:PC:DEC=1:1:1 to obtain an organic solvent. Next, the fully dried lithium salt $LiPF_6$ is dissolved in the organic solvent, and mixed uniformly to obtain an electrolyte with a lithium salt concentration of 1mol/L.

(4) Battery assembly

The prepared positive electrode sheet, separator, and negative electrode sheet are placed in sequence, so that the separator is located between the positive and negative electrode sheets to serve as an isolation function. A bare cell is obtained through winding, where a bare cell thickness is 12±0.3mm. After the bare cell is hot pressed by a hot press machine (hot pressing temperature is 95±2°C, hot pressing pressure is 4.5Mpa, and hot pressing time is 35s), and packaged with an aluminum-plastic film. The aforementioned prepared electrolyte is injected into the dried bare cell, and after processes such as vacuum sealing, standing, formation, and shaping, a lithium ion secondary battery is obtained.

The lithium ion secondary batteries prepared in Embodiments 1 to 16 and Comparative Examples 1 to 3 are respectively subjected to performance testing. The testing process is as follows, and the test results are shown in Table 1 and Table 2.

(1) True density test:

Taking the inorganic particles used for preparing the heat resistant layer in Embodiments 1 to 16 and Comparative Examples 1 to 3 as samples, with reference to the test method of national standard: QB/T1010-2015, the true density of the samples is obtained.

Alternatively, taking the separators prepared in Embodiments 1 to 16 and Comparative Examples 1 to 3 as samples, or disassembling the batteries prepared in Embodiments 1 to 16 and Comparative Examples 1 to 3 to obtain separators, and washing and drying the separators by natural ventilation as samples, separating the inorganic particles in the samples, with reference to the testing method of national standard: QB/T1010-2015, the true density of the samples is obtained.

The separation method is not particularly limited, as long as the method may satisfy the testing requirements of QB/T1010-2015, and the schemes that may be adopted at least include the following scheme.

Scheme 1: the sample is dissolved in DMAC (dimethylacetamide) or NMP (N-methylpyrrolidone) and ultrasonically cleaning for 12 hours until the inorganic particles are separated from the base film, filtering and drying to obtain the inorganic particles. DMAC or NMP may be repeatedly used for ultrasonic cleaning until the inorganic particles satisfy the testing requirements of QB/T1010-2015;

Scheme 2: the sample is calcined in a muffle furnace at 650°C for 2 hours and sieving out the inorganic particles. The muffle furnace may be repeatedly used for calcining until the inorganic particles satisfy the testing requirements of QB/T1010-2015.

(2) Bulk density test:

Taking the separators prepared in Embodiments 1 to 9 and Comparative Examples 1-3 as samples, or disassembling the batteries prepared in Embodiments 1 to 9 and Comparative Examples 1 to 3 to obtain separators, washing and drying the separators by natural ventilation as samples, the total thickness of the separator samples is obtained through testing by a Mahr thickness gauge, and the total weight is obtained by weighing the separator samples with a precision electronic balance. The area of the separator samples is measured and recorded as the total area. The aforementioned separators are soaked in NMP solvent and ultrasonically washed to remove the heat resistant layer on the separator surface to obtain the base film. The base film thickness is tested and recorded. The base film weight is obtained by weighing with a precision electronic balance. The areal density of the heat resistant layer: W = (total weight - base film

weight) / (2 × total area). The heat resistant layer thickness = (total thickness - base film thickness) / 2. The bulk density of the heat resistant layer is calculated by the areal density of the heat resistant layer / the heat resistant layer thickness. The unit of the bulk density is: g/cm$^3$.

Alternatively, taking the separators prepared in Embodiments 10 to 16 as samples, or disassembling the batteries prepared in Embodiments 10 to 16 to obtain separators, washing and drying the separators by natural ventilation as samples, after removing the adhesive layer on the sample surface, the total thickness of the separator samples is obtained through testing by a Mahr thickness gauge, and the total weight is obtained by weighing the separator samples with a precision electronic balance. The area of the separator samples is measured and recorded as the total area. The aforementioned separators are soaked in NMP solvent and ultrasonically washed to remove the heat resistant layer on the separator surface to obtain the base film. The base film thickness is tested and recorded. The base film weight is obtained by weighing with a precision electronic balance. The areal density of the heat resistant layer: W = (total weight - base film weight) / (2 × total area). The heat resistant layer thickness = (total thickness - base film thickness) / 2. The test value of the bulk density of the heat resistant layer is calculated by the areal density of the heat resistant layer / the heat resistant layer thickness. After correcting the characterization result error caused by removing the adhesive layer on the sample surface, the bulk density value is obtained. The unit of the bulk density is: g/cm$^3$.

The aforementioned method for removing the adhesive layer on the sample surface is not particularly limited. As long as the adhesive layer may be removed as much as possible without damaging the morphology of the heat resistant layer, the schemes that may be used at least include in the following.

**A** Keyence VHX-7000 scanning microscope is used to scan and record the coverage area of the adhesive layer on the sample surface, recorded as the initial area. The adhesive layer on the separator surface is removed repeatedly through adhesive tape until the coverage area of the adhesive layer on the sample surface is lower than 5% of the initial area. At this time, the adhesive layer and the heat resistant layer are considered to be sufficiently separated, and the bulk density of the heat resistant layer surface is tested accordingly. When the adhesive tape is used to remove the adhesive layer, compared to directly using the separator without the adhesive layer as a sample, a portion of the adhesive layer may inevitably remain on the separator surface and there may be a certain damage to the heat resistant layer. Therefore, compared to the test results of directly using the separator without the adhesive layer as a sample, the results are higher with a 5% error.

It should be noted that the separator satisfying a certain bulk density range provided in the foregoing of the disclosure is based on the characterization results obtained by using the separators prepared in Embodiments 1 to 9 and Comparative Examples 1 to 3, in which the heat resistant layer is the outermost layer, as samples.

(3) Static friction coefficient test:

Taking the separators prepared in Embodiments 1 to 9 and Comparative Examples 1 to 3 as samples, or disassembling the batteries prepared in Embodiments 1 to 9 and Comparative Examples 1 to 3 to obtain separators, finding separators with relatively intact opposing surfaces, washing and drying the separators by natural ventilation as samples, fixing the positive electrode sheet on a certain inclined surface, then laying the separator to be tested flat on the surface of the positive electrode sheet, an angle of the inclined surface is gradually increased. When the separator starts to slide, an angle $\theta$ is recorded at this moment. The static friction coefficient of the separator to the positive electrode sheet $\mu = \tan\theta$ may be calculated through the angle.

Alternatively, taking Embodiments 10 to 16 as samples, or disassembling the batteries prepared in Embodiments 1 to 16 to obtain separators, washing and drying the separators by natural ventilation as samples, after removing the adhesive layer on the sample surface, finding separators with relatively intact opposing surfaces, washing and drying the separators by natural ventilation as samples, fixing the aforementioned positive electrode sheet on a certain inclined surface, then laying the separator to be tested flat on the surface of the aforementioned positive electrode sheet, the angle of the inclined surface is gradually increased. When the separator starts to slide, the angle $\theta$ is recorded at this moment. The static friction coefficient test value of the separator to the positive electrode sheet $\mu = \tan\theta$ may be calculated through the angle. The static friction coefficient value is obtained after correcting the characterization error caused by removing the adhesive layer on the sample surface.

The removing method of the adhesive layer on the sample surface is not particularly limited. As long as the adhesive layer may be removed as much as possible without damaging the morphology of the heat resistant layer, the schemes that may be used at least include in the following.

A Keyence VHX-7000 scanning microscope is used to scan and record the coverage area of the adhesive layer on the sample surface, recorded as the initial area. The adhesive layer on the separator surface is repeatedly removed through adhesive tape until the coverage area of the adhesive layer on the sample surface is lower than 5% of the initial area. At this time, the adhesive layer and the heat resistant layer are considered to be sufficiently separated, and the static friction coefficient of the heat resistant layer surface is tested accordingly. When the adhesive tape is used to remove the adhesive layer, compared to directly using the separator without the adhesive layer as a sample, a portion of the adhesive

layer may inevitably remain on the separator surface and there may be a certain damage to the heat resistant layer. Therefore, compared to the test results of directly using the separator without the adhesive layer as a sample, the results are be higher with a 10% error.

It should be noted that the separator satisfying a certain static friction coefficient range provided in the foregoing of the disclosure is based on the characterization results obtained by using the separators prepared in Embodiments 1 to 9 and Comparative Examples 1 to 3, in which the heat resistant layer is the outermost layer, as samples.

(4) Effective adhesion R value and R value difference test:

Taking the separators prepared in Embodiments 10 to 16 as samples, or disassembling the batteries prepared in Embodiments 10 to 16 and Comparative Examples 1-3 to obtain separators, washing and drying the separators by natural ventilation as samples, the area covered within 90% length range near the center position of the separator width is the sampling area. The sampling area is equally divided into five equal portions in the width direction to obtain five equal portion sampling areas with the same width. In each equal portion sampling area, taking pieces of separator with a diameter of 90% of the width, continuously taking five pieces of separator along the same width direction, the separator surface is scanned through Keyence VHX-7000 to output the initial unit area of an adhesive layer S1. The adhesive layer S1 is laminated with the aforementioned positive electrode sheet of the same area and then hot pressed. The hot pressing parameters are: hot pressing temperature is 95±2°C, hot pressing pressure is 4.5Mpa, and hot pressing time is 35 seconds. After hot pressing, external force is gently applied to peel the separator from the positive electrode sheet. The magnitude of the external force is not particularly limited. As long as the separation of the separator and the positive electrode sheet may be achieved, Keyence VHX-7000 is used to scan the electrode surface to output the unit adhesive layer area S2 to obtain the separator effective bonding degree R=S2/S1. The difference between the maximum R value and the minimum R value among the five pieces of separator lies in that the effective adhesive difference.

(5) Adhesive force test between separator and electrode sheet:

Taking the separators prepared in Embodiments 1 to 16 and Comparative Examples 1 to 3 as samples, first the separator and the electrode sheet are cut into small strips with a size of 50mm in length and 15mm in width. Next, the small samples of the separator and the electrode sheet are stacked together up and down, hot pressed and composited into one through a flat plate hot press. The hot pressing temperature is 95±2°C, the hot pressing pressure is 4.5Mpa, and the hot pressing time is 35 seconds. Next, the hot pressed separator/electrode sheet composite strip is tested through a universal testing machine by 180°C peeling method to obtain the adhesive force between the separator and the electrode sheet.

(6) Air permeability test of separator

Taking the separators prepared in Embodiments 1 to 16 and Comparative Examples 1 to 3 as samples, the separator is punched into samples of 50mm×50mm, and placed on the test platform of OHKEN permeability tester. A value displayed by the tester is the air permeability of the separator.

(7) Cycle performance test of lithium ion secondary battery

Taking the batteries prepared in Embodiments 1 to 16 and Comparative Examples 1 to 3 as samples, at 25°C, the battery is charged at 0.5C constant current to 4.25V, then charged at 4.25V constant voltage until the current is lower than 0.05C, and discharged at 0.5C constant current to 2.8V, which is a first cycle process. The discharge capacity of the first cycle of the lithium ion secondary battery is recorded. Next, 300 charge and discharge cycles are performed according to the aforementioned method. Taking 3 lithium ion secondary batteries for each group, the average value is calculated.

Capacity retention rate of lithium ion secondary battery after 300 cycles = (discharge capacity of lithium ion secondary battery after 300 cycles / discharge capacity of the first cycle of lithium ion secondary battery) × 100%.

Table 1: Separator parameters and performance of Embodiments 1 to 9 and Comparative Examples 1 to 3

| | Inorganic particle type | Heat resistant layer static friction coefficient | True density ρ (g/cm$^3$) | Stacking density A (g/cm$^3$) | R value | R value difference | Adhesive force between separator and positive electrode sheet N/m | Separator air permeability s/100cc | Capacity retention rate after 300 cycles at 25°C |
|---|---|---|---|---|---|---|---|---|---|
| Embodiment 1 | boehmite | 0.80 | 3.07 | 1.23 | / | / | 0.65 | 180 | 97.00% |
| Embodiment 2 | boehmite | 0.55 | 3.07 | 1.23 | / | / | 0.72 | 183 | 97.10% |
| Embodiment 3 | boehmite | 0.54 | 3.07 | 1.36 | / | / | 0.73 | 194 | 97.30% |
| Embodiment 4 | boehmite | 0.54 | 3.07 | 1.52 | / | / | 0.74 | 203 | 97.40% |
| Embodiment 5 | boehmite | 0.22 | 3.07 | 1.53 | / | / | 0.78 | 201 | 97.80% |
| Embodiment 6 | boehmite | 0.33 | 3.07 | 1.52 | / | / | 0.77 | 202 | 97.70% |
| Comparative Example 1 | boehmite | 0.92 | 3.07 | 1.36 | / | / | 0.45 | 195 | 96.70% |
| Comparative Example 2 | boehmite | 0.55 | 3.07 | 1.15 | / | / | 0.53 | 172 | 96.70% |
| Comparative Example 3 | boehmite | 0.55 | 3.07 | 1.61 | / | / | 0.72 | 217 | 96.50% |
| Embodiment 7 | alumina | 0.32 | 3.95 | 1.59 | / | / | 0.77 | 180 | 97.80% |
| Embodiment 8 | titanium dioxide | 0.33 | 4.26 | 1.72 | / | / | 0.78 | 183 | 97.80% |
| Embodiment 9 | barium titanate | 0.32 | 6.02 | 2.42 | / | / | 0.77 | 181 | 97.80% |

Table 2: Separator parameters and performance of Embodiments 10-16

| | Inorganic particle type | Heat resistant layer static friction coefficient | True density ρ (g/cm$^3$) | Stacking density A (g/cm$^3$) | R value | R value difference | Adhesive layer coating weight | Adhesion between separator and positive electrode sheet N/m | Separator air permeability s/100cc | Capacity retention rate after 300 cycles at 25°C |
|---|---|---|---|---|---|---|---|---|---|---|
| Embodiment 10 | boehmite | 0.22 | 3.07 | 1.53 | 43%,48%,69%, 73%,77% | 34% | 0.5 | 1.37 | 192 | 93.60 % |

(continued)

| | Inorganic particle type | Heat resistant layer static friction coefficient | True density ρ (g/cm3) | Stacking density A (g/cm3) | R value | R value difference | Adhesive layer coating weight | Adhesion between separator and positive electrode sheet N/m | Separator air permeability s/100cc | Capacity retention rate after 300 cycles at 25°C |
|---|---|---|---|---|---|---|---|---|---|---|
| Embodiment 11 | boehmite | 0.22 | 3.07 | 1.53 | 56%,59%,67%, 70%,73% | 17% | 0.5 | 1.80 | 193 | 93.90 % |
| Embodiment 12 | boehmite | 0.22 | 3.07 | 1.53 | 76%,75%,77%, 77%,75% | 2% | 0.5 | 2.48 | 192 | 94.40 % |
| Embodiment 13 | boehmite | 0.22 | 3.07 | 1.53 | 58%,64%,62%, 70%,71% | 13% | 0.5 | 2.26 | 193 | 94.20 % |
| Embodiment 14 | boehmite | 0.22 | 3.07 | 1.53 | 66%,74%,72%, 76%,79% | 13% | 0.5 | 2.77 | 192 | 94.80 % |
| Embodiment 15 | boehmite | 0.22 | 3.07 | 1.53 | 78%,72%,70%, 72%,74% | 8% | 0.5 | 2.89 | 193 | 95.10 % |
| Embodiment 16 | boehmite | 0.22 | 3.07 | 1.53 | 78%,79%,76%, 77%,78% | 3% | 0.5 | 3.01 | 192 | 95.30 % |

Referring to Table 1, comparing Embodiments 1 to 6 and Comparative Examples 1 to 3, under the premise of keeping other conditions the same, by adjusting the solid content of the heat resistant layer slurry and the cell size used during coating, the surface static friction coefficient of the heat resistant layer and the bulk density of the heat resistant layer may be adjusted, thereby adjusting the adhesive force between the separator and the electrode sheet, the air permeability of the separator and the cycle performance of the battery. From the test results, it may be concluded that: when the surface static friction coefficient $\mu \leq 0.8$ of the heat resistant layer, and the bulk density A of the heat resistant layer is (0.4 to 0.5)ρ, the adhesive force between the separator and the positive electrode sheet is stronger than that not within the aforementioned specific range, the air permeability of the separator is moderate, and the cycle performance of the battery is better. If the bulk density A of the heat resistant layer is within the aforementioned specific range, but the static friction coefficient μ is too high (Comparative Example 1), the adhesive force between the separator and the positive electrode sheet is also small. The reason is that: when the static friction coefficient is larger, the surface of the heat resistant layer obtained becomes uneven, and the effective adhesive area between the adhesive particles in the heat resistant layer and the porous base film becomes smaller, which results in insufficient adhesive force between the separator and the electrode sheet. If the static friction coefficient satisfies $\mu \leq 0.8$, but the bulk density A of the heat resistant layer $<0.4\rho$ (Comparative Example 2), insufficient adhesive force between the separator and the electrode sheet may occur. If the bulk density A of the heat resistant layer $>0.5\rho$ (Comparative Example 3), the adhesive force between the separator and the electrode sheet may reach the standard, but the test value of the air permeability of the separator is too high. In other words, the time for lithium ions to pass through the separator increases, reducing the transmission efficiency of lithium ions, thereby affecting the cycle performance of the battery.

Taking a looking at Embodiments 1 to 5, for the heat resistant layer composed of boehmite as the heat resistant material, if the surface static friction coefficient $\mu \leq 0.8$, and the bulk density A of the heat resistant layer is (0.4 to 0.5)ρ, the smooth and dense heat resistant layer provides an adhesive force with the positive electrode sheet reaching above 0.65N/m, and a separator with an air permeability value of 180-203s/100cc, so as to achieve the effect of increasing the battery cycle retention rate. Under the synergistic adjustment of the static friction coefficient and the bulk density, Embodiment 5 is an optimal example, obtaining a battery with a capacity retention rate of 97.8% after 300 cycles at 25°C.

**In** Embodiments 7 to 9, by replacing with different inorganic particles, when the surface static friction coefficient of the heat resistant layer is less than or equal to 0.8, and the bulk density of the heat resistant layer satisfies (0.4 to 0.5)ρ,

better results may also be achieved.

Compared with Embodiments 1 to 9, Embodiments 10 to 16 added an adhesive layer on the heat resistant layer. The adhesive force between the separator and the positive electrode sheet is greater, and the adhesive force between the separator and the negative electrode sheet is also greater. The reason is that: after hot pressing of the cell, the adhesive force between the adhesive layer and the electrode sheet is exerted, further increasing the adhesive force between the separator as a whole and the electrode sheet.

Compared with Embodiments 10 to 13, adjusting the spacing of the coating head rotors during adhesive layer spraying may adjust the distance of the spraying coverage area between each rotor and the spraying point morphology, so as to achieve the purpose of adjusting the effective adhesion R value and the effective adhesion difference of the separator. The test results indicate that: when the effective adhesion R value difference of the separator is less than 20%, compared with when the R value difference is greater than 20% (Embodiment 10), the adhesive force between the separator and the electrode sheet is further increased, and the cycle performance of the cell is further enhanced. The reason is that: when the effective adhesion R value difference is smaller, the uniformity of the adhesive force between the separator and the electrode sheet becomes greater, and the adhesive force becomes stronger; when the effective adhesion R value difference is larger, the uniformity of the adhesive force between the separator and the electrode sheet becomes worse, and the adhesive force becomes weaker.

Compared with Embodiments 11 to 13 and Embodiments 14 to 16, adjusting the process parameters of the coating head rotor spacing and spraying rotation speed during adhesive layer spraying makes the separator satisfy the effective adhesion R value difference less than 20% while the effective adhesion R value is 60-80%. The test results indicate that: when the effective adhesion R value difference of the separator is less than 20%, and the effective adhesion R value is 60-80%, the adhesive force between the separator and the electrode sheet is further increased, and the cycle performance of the cell is further enhanced. The reason is that: when the effective adhesion R value is higher, the effective adhesive area between the separator and the electrode sheet becomes larger, the adhesive points become more, and the adhesive force becomes stronger.

The separator provided by the disclosure may obtain a heat resistant layer with dense stacking and smooth surface by controlling the static friction coefficient and bulk density of the heat resistant layer on the base film surface, so that the effective contact area between the adhesive particles in the heat resistant layer and the porous base film is increased, thereby increasing the adhesive force between the heat resistant layer and the porous base film, and increasing the adhesive force between the separator as a whole and the electrode sheet. By disposing the adhesive layer on the heat resistant layer, after hot pressing of the battery, the adhesive force is formed between the adhesive layer and the electrode sheet to achieve the shaping effect of the battery. At the same time, the cell wrinkling deformation caused by expansion of the electrode sheet after cycling may also suppressed, thereby improving the cycle life of the battery. Moreover, the heat resistant layer with dense stacking and smooth surface also increases the effective contact area between the adhesive particles in the adhesive layer and the heat resistant layer, further increasing the adhesive force between the separator as a whole and the electrode sheet. In addition, controlling the effective adhesion difference of the separator to be lower than 20% may make the distribution of the adhesive force between the electrode sheet and the separator more uniform, and controlling the effective adhesion within 60% to 80% ensures sufficient density of adhesive points between the separator and the electrode sheet, thereby further increasing the adhesive force between the separator and the electrode sheet. Therefore, the disclosure effectively overcomes some practical problems in the prior art and thus has high utilization value and practical significance.

## Claims

**1.** A separator (100), comprising:

a porous base film (101);
a heat resistant layer (102), disposed on at least one surface of the porous base film (101);
wherein the heat resistant layer (102) comprises inorganic particles and an adhesive agent, a surface static friction coefficient of the heat resistant layer (102) is $\leq 0.8$, and a bulk density A of the heat resistant layer (102) satisfies: $A=(0.4 \text{ to } 0.5)\times\rho$, where $\rho$ indicates a true density of the inorganic particles, in units of $g/cm^3$.

**2.** The separator (100) according to claim 1, further comprising an adhesive layer (103), wherein the adhesive layer (103) is disposed on at least another surface of the heat resistant layer (102) opposite to a surface contacting the porous base film (101).

**3.** The separator (100) according to claim 2, wherein a difference between a maximum value and a minimum value of an effective adhesion R value on a side of the separator (100) provided with the heat resistant layer (102) is $\leq 20\%$, where

the effective adhesion R value indicates a ratio of an effective adhesion area of the separator (100) to a theoretical adhesion area.

4. The separator (100) according to claim 2 or 3, wherein the effective adhesion R value on the side of the separator (100) provided with the heat resistant layer (102) is 60% to 80%, where the effective adhesion R value indicates the ratio of the effective adhesion area of the separator (100) to the theoretical adhesion area.

5. The separator (100) according to claim 1, wherein a volume ratio of the inorganic particles in the heat resistant layer (102) is 80% to 99%.

6. The separator (100) according to claim 1, wherein the inorganic particles are selected from at least one of aluminum oxide, hydrated aluminum oxide, aluminum hydroxide, silicon dioxide, titanium dioxide, barium sulfate, barium titanate, magnesium hydroxide, and magnesium oxide.

7. The separator (100) according to claim 1, wherein an average particle size of the adhesive agent is smaller than an average particle size of the inorganic particles.

8. The separator (100) according to claim 2, wherein a single-side coating amount of the adhesive layer (103) is 0.1 $g/m^2$ to $2g/m^2$.

9. The separator (100) according to claim 1, wherein the adhesive agent is selected from at least one of polyacrylonitrile and a copolymer thereof, polyacrylic acid and a copolymer thereof, polyacrylate and a copolymer thereof, styrene-butadiene copolymer, styrene-acrylate copolymer, and fluorine-based polymer materials.

10. An electrochemical device, comprising a positive electrode sheet, a negative electrode sheet, and the separator (100) according to any one of claims 1 to 9 disposed between the positive electrode sheet and the negative electrode sheet.

100
103
102
101

FIG. 1

103
102
100
101

FIG. 2

Europäisches
Patentamt
European
Patent Office
Office européen
des brevets

# EUROPEAN SEARCH REPORT

Application Number
EP 26 15 7411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 138 198 A1 (LG ENERGY SOLUTION LTD [KR]) 22 February 2023 (2023-02-22)<br>* example 1 abd table 1; claims; paragraph 38 *<br>----- | 1-10 | INV.<br>H01M10/0525<br>H01M50/417<br>H01M50/434<br>H01M50/443<br>H01M50/446<br>H01M50/449<br>H01M50/46<br>H01M50/489 |

TECHNICAL FIELDS SEARCHED (IPC)

H01M

The present search report has been drawn up for all claims

| Place of search | Date of completion of the search | Examiner |
|---|---|---|
| Munich | 5 May 2026 | Okunowski, Françoise |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 26 15 7411

This annex lists the patent family members relating to the patent documents cited in the above-mentioned European search report. The members are as contained in the European Patent Office EDP file on The European Patent Office is in no way liable for these particulars which are merely given for the purpose of information.

05-05-2026

| Patent document cited in search report | Publication date | Patent family member(s) | Publication date |
|---|---|---|---|
| EP 4138198 A1 | 22-02-2023 | CN 116195124 A | 30-05-2023 |
| | | EP 4138198 A1 | 22-02-2023 |
| | | JP 7507879 B2 | 28-06-2024 |
| | | JP 2023522345 A | 30-05-2023 |
| | | KR 20220047200 A | 15-04-2022 |
| | | US 2023170579 A1 | 01-06-2023 |
| | | WO 2022075823 A1 | 14-04-2022 |

EPO FORM P0459

For more details about this annex : see Official Journal of the European Patent Office, No. 12/82